# EUROPEAN PATENT APPLICATION

(11) **EP 4 394 440 A1**
(43) Date of publication of application: **03.07.2024**
(21) Application number: 22861629.8
(22) Date of filing: 18.08.2022
(51) Int. Cl.: G01S 7/497, G01S 17/894, G06T 7/11, G06T 17/05, G06V 20/13

(54) **METHOD FOR SENSING INSTALLATION ABNORMALITY OF SENSING DEVICE, AND SENSING DEVICE FOR PERFORMING SAME**

(30) Priority: 26.08.2021 KR 20210113404
(71) Applicant: Seoul Robotics Co., Ltd., Seoul 06649 (KR)
(72) Inventor: PARK, Jaeil, Seoul 08715 (KR); TRUONG, Hong Minh, Suwon-si, Gyeonggi-do 16509 (KR); KIM, Young Seong, Seoul 04773 (KR); KANG, Seong Ju, Seoul 08792 (KR)
(74) Representative: J A Kemp LLP
(86) International application number: PCT/KR2022/012338
(87) International publication number: WO 2023/027419

(57) **Abstract**

A sensing device includes a sensor unit configured to obtain point clouds over time with respect to a three-dimensional space by using a LiDAR sensor, a memory, and a processor configured to, by executing one or more instructions, determine a static object area of the three-dimensional space based on the obtained point clouds over time with respect to the three-dimensional space, and determine an installation abnormality of the sensing device based on static point clouds having a certain time difference among static point clouds over time corresponding to the determined static object area.

## Description

### Technical Field

The disclosure relates to a method of sensing an installation abnormality of a sensing device and a sensing device for performing the same.

### Background Art

With the development of sensing technology such as light detection and ranging (LiDAR) technology, recently, advanced control functions incorporating sensing technology have been utilized in various industrial technological fields. To this end, various sensing devices are installed.

LiDAR is a technology to obtain information about the three-dimensional space by emitting light to objects in a three-dimensional space and then receiving reflected light. LiDAR devices cannot perceive colors like a camera image sensor, but the LiDAR devices can detect distant objects and have excellent spatial resolution.

### Disclosure

### Technical Problem

Provided is a method of sensing an installation abnormality of a sensing device based on a change in a point cloud obtained by using a light detection and ranging (LiDAR) sensor, without a separate additional device, when a change occurs in the installation state of the sensing device, and a sensing device for performing the same.

### Technical Solution

According to a first aspect of the disclosure, a method of sensing an installation abnormality of a sensing device includes obtaining point clouds over time with respect to a three-dimensional space by using a light detection and ranging (LiDAR) sensor, determining a static object area of the three-dimensional space based on the obtained point clouds over time with respect to the three-dimensional space, and determining the installation abnormality of a sensing device based on the static point clouds having a certain time difference among static point clouds over time corresponding to the determined static object area.

According to a second aspect of the disclosure, a computer-readable storage medium having recorded thereon a program to be executed on a computer includes instructions to obtain point clouds over time with respect to a three-dimensional space by using a LiDAR sensor, instructions to determine a static object area of the three-dimensional space, based on instructions based on the obtained point clouds over time with respect to the three-dimensional space, and instructions to determine an installation abnormality of a sensing device based on static point clouds having a certain time difference among static point clouds over time corresponding to the determined static object area.

According to a third aspect of the disclosure, a sensing device includes a sensor unit configured to obtain point clouds over time with respect to a three-dimensional space by using a LiDAR sensor, a memory storing one or more instructions, and a processor configured to, by executing the one or more instructions, determine the static object area of the three-dimensional space based on the obtained point clouds over time with respect to the three-dimensional space, and determine an installation abnormality of the sensing device based on static point clouds having a certain time difference among static point clouds over time corresponding to the determined static object area.

### Description of Drawings

FIG. 1 is a view for explaining an installation state of a sensing device and a changed installation state of the sensing device.
FIG. 2 is a view for explaining a configuration and an operation of a sensing device according to an embodiment.
FIG. 3 is a view for explaining a dynamic point cloud, a static point cloud, and a static object area in a space information map generated by a sensing device.
FIG. 4 is a view for explaining a voxel map and a voxel corresponding to a unit area of the voxel map.
FIG. 5 is a view for explaining a process of distinguishing a static voxel from a dynamic voxel.
FIG. 6 is a view for explaining a process of determining an installation abnormality of a sensing device.
FIG. 7 is a view for explaining a configuration and an operation of a server according to an embodiment.
FIG. 8 is a flowchart for explaining a method of sensing an installation abnormality of a sensing device, according to an embodiment.
FIG. 9 is a detailed flowchart for explaining a process of determining an installation abnormality of a sensing device.

### Mode for Invention

Hereinafter, various embodiments are described in detail with reference to the accompanying drawings. In order to describe the features of the embodiments more clearly, detailed descriptions on items that are well-known to a person skilled in the art to which the following embodiments pertain are omitted.

In the description of embodiments, when a constituent element is "connected" to another constituent element, the constituent element contacts or is connected to the other constituent element directly or through at least one of other constituent elements. Furthermore, it will be further understood that the term "comprises" used herein specifies the presence of stated features or components, but does not preclude the presence or addition of one or more other features or components.

Furthermore, in the specification, terms such as "first" and "second" are used herein merely to describe a variety of constituent elements, but the constituent elements are not limited by the terms. It is obvious that the constituent elements are not limited by the terms. The terms are used only for the purpose of distinguishing one constituent element from another constituent element.

The present embodiments relate to a method of sensing an installation abnormality of a sensing device, and a sensing device for performing the same, and detailed descriptions on items that are well-known to a person skilled in the art to which the following embodiments pertain are omitted.

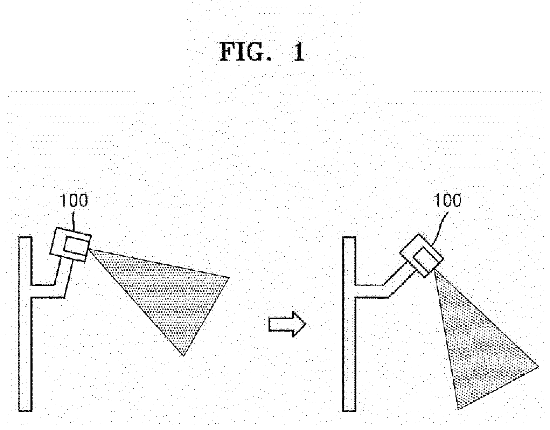

FIG. 1 is a view for explaining an installation state of a sensing device 100 and a changed installation state of the sensing device 100.

The sensing device 100 is a device capable of obtaining point cloud data, as space information, regarding a three-dimensional space, and may include at least one sensor. The sensing device 100 may emit light to a three-dimensional space and obtain a point cloud of the three-dimensional space based on the light received in response thereto. The sensing device 100 may be installed indoors or outdoors to sense a space corresponding to the area of interest or a space as large as possible. For example, as shown in FIG. 1, the sensing device 100 may be installed by being fixed to a structure.

The sensing device 100 may include a light detection and ranging (LiDAR) sensor as a 3D sensor for sending a three-dimensional space and may obtain volumetric point cloud data. The sensing device 100 may further include, as necessary, various types of sensors, such as a radar sensor, an infrared image sensor, a camera, and the like. The sensing device 100 may use a plurality of homogeneous sensors or a combination of heterogeneous sensors, considering a detection range that each type of sensor has or the type of data that can be obtained, and the like.

Although the LiDAR sensor is not able to sense the colors of objects in a three-dimensional space, the LiDAR sensor may sense the shapes, sizes, or location of the objects. Although a multi-channel LiDAR sensor that may collect information about a three-dimensional space is not able to sense the colors or textures of objects, the multi-channel LiDAR sensor is suitable for a field in which the approximate shapes, sizes, or volumes of the objects can be utilized.

As illustrated in FIG. 1, as a physical shock is applied to the sensing device 100 installed on the structure, a support portion or a connection portion of the structure on which the sensing device 100 is installed is worn out so as not support the sensing device 100, and the like, a change may occur in the installation state of the sensing device 100. When a change occurs in the installation location or angle of the sensing device 100, the point cloud of a three-dimensional space obtained by the sensing device 100 may be changed. If the point cloud for the three-dimensional space obtained from the sensing device 100 is utilized to control a device or provide a specified service, the device may be incorrectly controlled or the service may not be provided when the point cloud for the three-dimensional space obtained by the sensing device 100 is used without knowing a change in the installation state of the sensing device 100.

In order to sense a change in the installation state of the sensing device 100, an inertia sensor and the like may be additionally mounted. However, when the additional installation of a device such as an inertia sensor on the sensing device 100 is impossible or difficult, or a change occurs in the installation state slightly and for a long time, it may be difficult to sense the installation abnormality of the sensing device 100.

Hereinafter, when a change occurs in the installation state of the sensing device 100, a method of sensing the installation abnormality of the sensing device 100 based on a change in the point cloud obtained by using a LiDAR sensor, without a separate additional device, and the sensing device 100 for performing the same, are described.

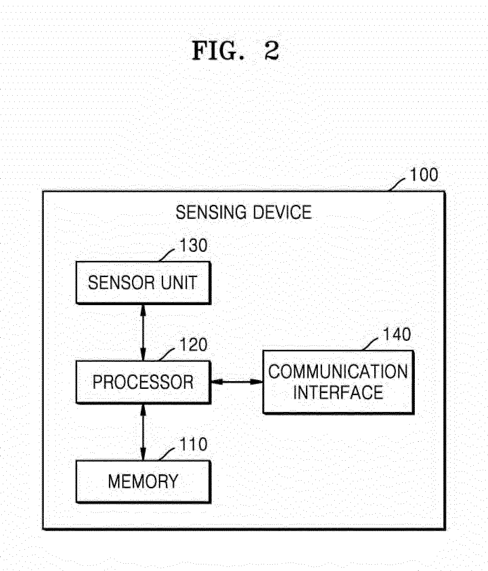

FIG. 2 is a view for explaining a configuration and an operation of the sensing device 100 according to an embodiment.

Referring to FIG. 2, the sensing device 100 according to an embodiment may include a memory 110, a processor 120, a sensor unit 130, and a communication interface 140. A person skilled in the art to which the present embodiment pertain can understand that, in addition to the components illustrated in FIG. 2, other general-purpose components may be further included.

The memory 110 may store software and/or a program. The memory 110 may store instructions to be executable by the processor 120.

The processor 120 may access and use the data stored in the memory 110 or store new data in the memory 110. The processor 120 may execute the instructions stored in the memory 110. The processor 120 may execute a computer program installed in the sensing device 100. Furthermore, the processor 120 may store and execute an externally received computer program or application in the memory 110. The processor 120 may perform a certain operation by executing at least one processing module. For example, the processor 120 may execute or control a processing module that executes a program for sensing the installation abnormality of the sensing device 100. The processor 120 may control other components included in the sensing device 100 to perform an operation corresponding to a result of the execution of instructions, computer programs, or the like.

The sensor unit 130 may include at least one sensor for sensing a three-dimensional space. The sensor unit 130 may include a light-emitting portion that emits light to a three-dimensional space and a light receiving portion that receives light, and may further include a dedicated processor that obtains the point cloud of a three-dimensional space based on the intensity of the light received by the light receiving portion. To track an object located in a three-dimensional space within a sensing range, the sensor unit 130 may obtain point clouds over time with respect to a three-dimensional space.

The sensor unit 130 may be a LiDAR sensor, and may include at least one three-dimensional LiDAR sensor to obtain data of a space in a certain range. The sensor unit 130 may further include various types of sensors, such as a radar sensor, an infrared image sensor, an ultrasound sensor, and the like, according to an environment. For example, the sensor unit 130 may further include at least one of a radar sensor and an ultrasound sensor to obtain data of a blind spot that cannot be sensed by the LiDAR sensor or a proximity space within a certain distance from the sensing device 100.

The communication interface 140 may perform wired/wireless communication with other devices or networks. To this end, the communication interface 140 may include a communication module that supports at least one of various wired/wireless communication methods. For example, short-range communication, such as radio frequency identification (RFID), near field communication (NFC), or Bluetooth, various types of wireless communication, or wired communication using a coaxial cable, an optical cable, and the like. The communication interface 140 may be connected to a device located outside the sensing device 100 to transceive signals or data. The sensing device 100 may communicate with a terminal device of a manager through the communication interface 140, or may be connected to an external server that controls a device or provides a certain service by using the point clouds over time with respect to a three-dimensional space obtained by the sensing device 100.

As the processor 120 according to the configuration as above executes one or more instructions stored in the memory 110, the point cloud of a three-dimensional space may be obtained by using a LiDAR sensor, and an object in the three-dimensional space may be identified based on the obtained point cloud of a three-dimensional space. When the sensing device 100 supports an object classification function by using an object classification model, the processor 120 may identify static objects such as the ground or buildings or dynamic objects such as animals, by applying the point cloud of a three-dimensional space to the object classification model or clustering the point cloud of a three-dimensional space.

When the sensing device 100 continuously senses a three-dimensional space to monitor the three-dimensional space, the processor 120 may obtain the point clouds over time with respect to a three-dimensional space by using the LiDAR sensor. The processor 120 may sense the installation abnormality of the sensing device 100, by a method described below, based on the obtained point clouds over time with respect to a three-dimensional space.

The processor 120, by executing one or more instructions stored in the memory 110, may determine a static object area of the three-dimensional space based on the obtained point clouds over time with respect to a three-dimensional space. The processor 120 may generate a space information map with respect to a three-dimensional space by detecting objects in a three-dimensional space based on the obtained point cloud of a three-dimensional space. In this state, the processor 120 may distinguish the objects in the three-dimensional space into static objects and dynamic objects. In the space information map generated based on the point clouds over time with respect to a three-dimensional space, the dynamic objects may be detected and may disappear, or may move positions within the space information map, whereas the static objects may be continuously detected at the same position in the space information map.

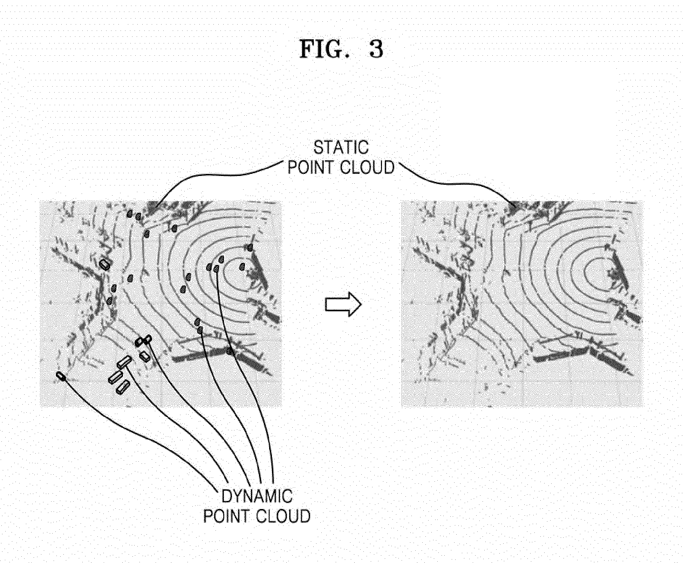

A method of distinguishing a dynamic point cloud corresponding to a dynamic object from a static point cloud corresponding to a static object in space information map, and a method of determining a static object area in a space information map, are described below with reference to FIGS. 3 to 5.

FIG. 3 is a view for explaining a dynamic point cloud, a static point cloud, and a static object area in the space information map generated by the sensing device 100.

Referring to FIG. 3, displayed is the space information map generated based on the point clouds over time with respect to a three-dimensional space obtained by using a LiDAR sensor. The space information map of FIG. 3 may be obtained by the sensing device 100 using a LiDAR sensor by installing the sensing device 100 at a position where the intersection through which vehicles move can be observed, and may be used to monitor the traffic information of an intersection that is the area of interest.

Through the space information map of FIG. 3, point clouds corresponding to vehicles and pedestrians moving and stopping according to traffic signals at the intersection. The vehicles and pedestrians that move correspond to dynamic objects, and the positions of the dynamic point clouds corresponding to dynamic objects are changed in the space information map so that the dynamic point clouds are not continuously detected in the same area for more than a certain period. In contrast, traffic infrastructure, roads, buildings, and the like of the intersection are not moving correspond to static objects, and these static point clouds corresponding to the static objects may be continuously detected in the same area of the space information map for more than a certain period.

When a point cloud is continuously detected in a specific area corresponding to specific coordinate for more than a certain period, the point cloud may be classified as a static point cloud corresponding to a static object. In contrast, when a point cloud is detected in a specific area less than a certain period, or is generated and then disappears, the point cloud may be classified as a dynamic point cloud corresponding to a dynamic object

Accordingly, the processor 120 may distinguish point clouds into a dynamic point cloud corresponding to a dynamic object and a static point cloud corresponding to a static object, based on a period during which a corresponding point cloud for the same area of a space information map is continuously detected. The processor 120, by removing a dynamic point cloud corresponding to a dynamic object from a full point cloud corresponding to the three-dimensional space or extracting only a static point cloud corresponding to a static object from a full point cloud corresponding to the three-dimensional space, may determine at least a part or the whole thereof as a static object area. In other words, the processor 120 may determine a static object area based on the continuity of a point cloud for the same area in frames of the space information map.

The processor 120 may determine a static object area based on a period during which a point could is continuously detected in a unit area at corresponding positions between frames of the space information map generated from the point clouds over time with respect to a three-dimensional space obtained by the sensor unit 130. The processor 120 may determine a static object area formed of a static point cloud in a reference frame of a specific time point of a space information map. For example, the processor 120 may determine a static object area formed of a static point cloud in a frame of a space information map corresponding to a certain time point after a certain period required to distinguish a dynamic point cloud from a static point cloud has passed the sensing device 100 is installed.

The processor 120 may determine a static object area based on a period during which the point clouds in unit areas at corresponding positions between frames of a space information map is continuously detected to be the number of points greater than or equal to a minimum detection threshold value. Even when a point cloud is continuously detected for the same area, the point cloud may include noise, and thus, a case of classifying a point cloud with noise as a static point could may be filtered by including only a case in which the number of points of a point cloud that is continuously detected maintains the number of points greater than or equal to a minimum detection threshold value.

The minimum detection threshold value may be set to an appropriate value according to an environment in which the sensing device 100 is installed or a weather condition. In this state, the minimum detection threshold value may be input directly by a user or automatically set to an appropriate value based on information about an external environment or a weather condition, the information being received by the sensing device 100.

The processor 120 may determine a static object area of a three-dimensional space based on a point cloud of an assigned area among the point clouds over time with respect to a three-dimensional space obtained by the sensor unit 130. When a reference area in which a dynamic point cloud hardly occurs is assigned, the sensing device 100 may determine a static object area of a three-dimensional space based on the point cloud of the assigned area, instead of using the obtained full point clouds over time with respect to a three-dimensional space. The reference area may be assigned by a user, or automatically assigned as an area that is determined by the sensing device 100 by using a trained model to be an area of a static point cloud corresponding to a static object corresponding to appropriate height and size.

The processor 120 may generate a normalized map presenting spatial information, like a voxel map, a depth map, and the like, from the obtained point clouds over time with respect to a three-dimensional space. For example, when the space information map is a voxel map, the processor 120 may distinguish static voxels from dynamic voxels in each frame of the voxel map, and may determine a static object area formed of static voxels in a reference frame of a specific time point of the voxel map.

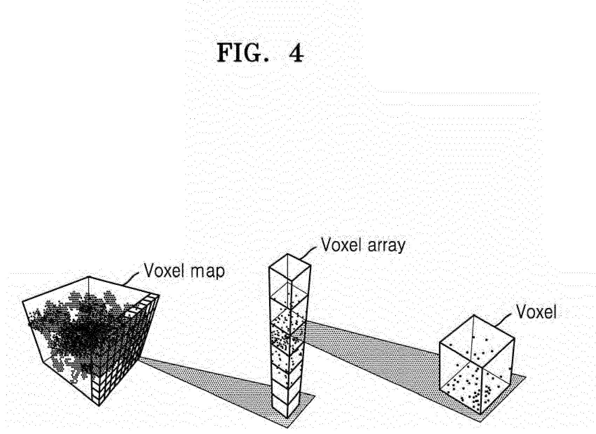

FIG. 4 is a view for explaining a voxel map and a voxel corresponding to a unit area of the voxel map.

Referring to FIG. 4, displayed is a voxel map corresponding to a three-dimensional space that is monitored by the sensing device 100. The voxel map may include a plurality of voxel arrays, and each voxel array may include a plurality of voxels. A voxel may correspond to a unit area of the voxel map, and each voxel may include a point cloud corresponding to a three-dimensional space. In this state, when a point cloud in the voxel is a dynamic point cloud, the voxel may be referred to as a dynamic voxel, and when a point cloud in the voxel is a static point cloud, the voxel may be referred to as a static voxel.

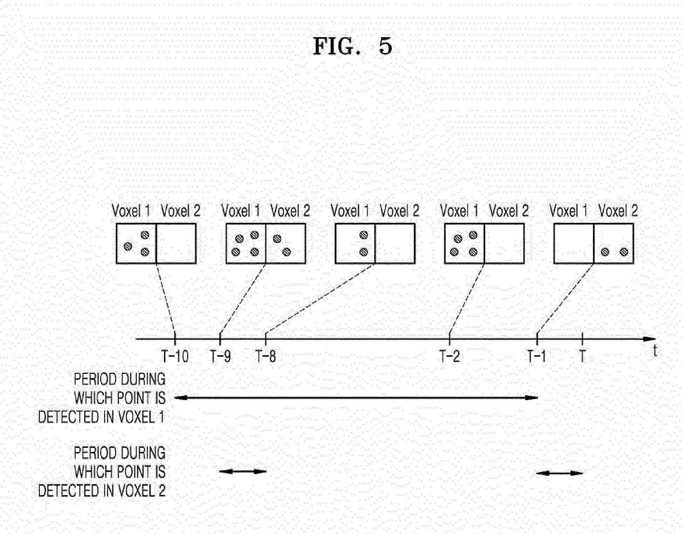

FIG. 5 is a view for explaining a process of distinguishing a static voxel from a dynamic voxel.

The processor 120 may distinguish voxels in each frame of a voxel map into a static voxel in which a period during which point clouds in voxels are continuously detected is greater than or equal to a threshold value and a dynamic voxel in which a period during which point clouds in voxels are continuously detected is less than the threshold value. In a specific voxel of a voxel map, when a point cloud in the voxel is continuously detected for more than a certain period, as the point cloud is a static point cloud corresponding to a static object, the voxel may be classified as a static voxel. Reversely, in a specific voxel of a voxel map, when a point cloud in the voxel is detected to be less than a certain period or a point cloud is generated and then disappears, as the point cloud is a dynamic point cloud corresponding to a dynamic object, the voxel may be classified as a dynamic voxel.

Referring to FIG. 5, it may be confirmed that point clouds exist in voxels from a time point T-10 to a time point T with respect to two voxels Voxel 1 and Voxel 2 forming a voxel map. In the first voxel Voxel 1, it may be seen that a point cloud is continuously detected in the voxels from the time point T-10 before a time point T-1. In contrast, in the second voxel Voxel 2, it may be confirmed that a point cloud exists at a time point T-9, does not exist from a time point T-8 to a time point T-2, and exist again at the time point T-1. In the first voxel Voxel 1, as a point cloud formed of at least two points is continuously detected from the time point T-10 before the time point T-1, the first voxel Voxel 1 may be referred to as a static voxel, and in the second voxel Voxel 2, as a point cloud is temporarily detected at the time point T-9 and the time point T-1 only, the second voxel Voxel 2 may be referred to as a dynamic voxel.

The processor 120 may distinguish voxels in which the point cloud exists into dynamic voxels and static voxels, based on a period during which a point cloud for the same voxel of a voxel map is continuously detected. The processor 120, by removing dynamic voxels from in all voxels of a voxel map, or extracting static voxels only from all voxels of a voxel map, may determine at least a part or the whole thereof as a static object area. In other words, the processor 120 may determine a static object area based on the continuity of a point cloud for a voxel at the same position in frames of a voxel map.

The processor 120 may determine a static object area based on a period during which a point cloud in voxels at corresponding positions between frames of a voxel map generated from the point clouds over time with respect to a three-dimensional space obtained by the sensor unit 130 is continuously detected. The processor 120 may determine a static object area formed of static voxels in a reference frame of a specific time point of a voxel map.

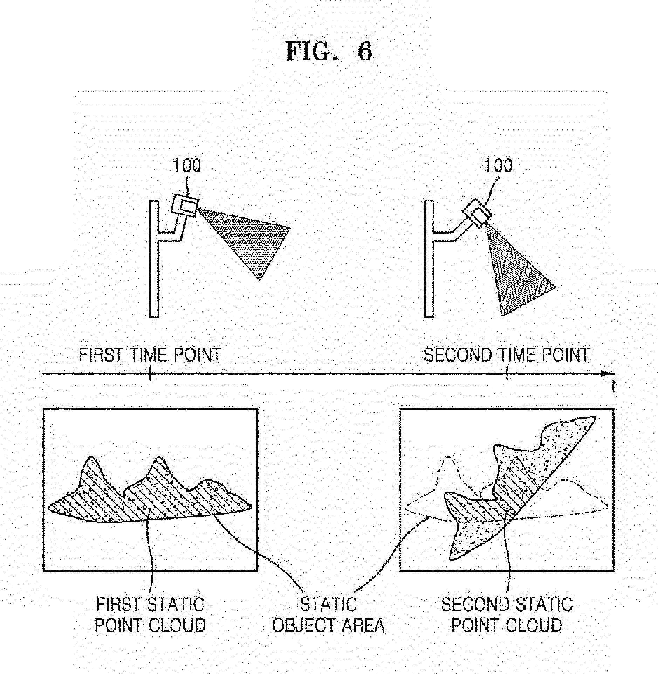

FIG. 6 is a view for explaining a process of determining the installation abnormality of a sensing device.

The processor 120 may determine the installation abnormality of the sensing device 100 based on static point clouds having a certain time difference among the static point clouds over time corresponding to a static object area. The static object area may be determined from a reference frame of a certain time point at which the sensing device 100 is confirmed to be normally installed. For example, the static object area may be determined from a frame of a space information map at a certain time point in the past after the sensing device 100 was normally installed on a structure.

The processor 120 may extract a first static point cloud at a first time point and a second static point cloud at a second time point having a certain time difference from first time point, from among the static point clouds over time corresponding to the determined static object area. The processor 120 may determine whether there is any installation abnormality of the sensing device 100, based on a difference between the first static point cloud and the second static point cloud.

Referring to FIG. 6, at each of the first time point at which the sensing device 100 is normally installed and the second time point at which a change occurs in the installation state of the sensing device 100, the first static point cloud and the second static point cloud corresponding to a static object area are indicated by hatch marks. The processor 120 may compare a first static point cloud corresponding to the static object area at the first time point with a second static point cloud corresponding to the static object area at the second time point.

For example, the processor 120 may determine the installation abnormality of the sensing device 100, by comparing a ratio of an area of a first static point cloud to a static object area with a ratio of an area of a second static point cloud to a static object area. When the time point at which a static object area is determined is set to be a first time point, as illustrated in FIG. 6, while a first static point cloud at a first time point is regularly detected within a static object area, a second static point cloud at a second time point is detected only in a part of the static object area. In FIG. 6, a time point for determining a static object area is set as a certain time point in the past at which the sensing device 100 was normally installed, but the disclosure is not limited thereto. Even when a time point for determining a static object area is set to be a current time point at which a change occurs in the installation state of the sensing device 100, by comparing a first static point cloud of a current time point with a second static point cloud of a past time point, the installation abnormality of the sensing device 100 may be determined.

In another example, when a voxel map is generated from point clouds over time with respect to the three-dimensional space obtained by the sensing device 100, the processor 120 may determine the installation abnormality of the sensing device 100 in a voxel map by comparing a ratio of the number of voxels forming a first static point cloud at a first time point to the number of all voxels forming the determined static object area with a ratio of the number of voxels forming a second static point cloud to the number of all voxels forming the determined static object area at a second time point.

The processor 120, by executing one or more instructions, may transfer, through the communication interface 140, a result of the determination of the installation abnormality of the sensing device 100 to a server that controls a device or provides a certain service by using the point clouds of the three-dimensional space obtained by the sensing device 100.

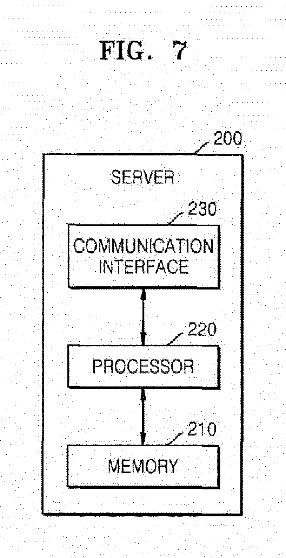

FIG. 7 is a view for explaining the configuration and operation of a server 200 according to an embodiment. The server 200 may be substituted by a computing device, an operator, a console device, and the like.

As described above, the sensing device 100 may be provided with a process that obtains point clouds over time as space information about a three-dimensional space, tracks a static object or a dynamic object in the three-dimensional space, and tracks the detected object, but the disclosure is not limited thereto. As the server 200 receives the point clouds over time with respect to the three-dimensional space obtained by the sensing device 100 to be used to control a device or provides a certain service, the server 200 may perform a series of processing of detecting a static object or a dynamic object in the three-dimensional space and tracking the detected object. The server 200 may be implemented with a technology such as cloud computing. The server 200 may perform high-speed data communication with the sensing device 100.

Referring to FIG. 7, the server 200 may include a memory 210, a processor 220, and a communication interface 230. Anyone skilled in the art related to the present embodiment will know that other general-purpose components may be included in addition to the components illustrated in FIG. 7. The description of the sensing device 100 presented above may be directly applied to the configuration of the server 200 under the same name, even if the description is omitted below.

Each component of the block diagram of FIG. 7 may be separated, added, or omitted according to the implementation method of the server 200. In other words, depending on the implementation method, one component may be subdivided into two or more components, two or more components may be combined into one component, or some components may be added or removed.

The memory 210 may store instructions executable by the processor 220. The memory 210 may store a software or program.

The processor 220 may execute the instructions stored in the memory 210. The processor 220 may perform the overall control of the server 200. The processor 220 may obtain information and requests received through the communication interface 230 and store the received information in a storage (not shown). Furthermore, the processor 220 may process the received information. For example, the processor 220 may obtain, from the information received from the sensing device 100, information used to control a device or provide a certain service, or perform a processing operation to manage pieces of the received information and store the processed information in the storage. Furthermore, the processor 220 may transmit, in response to a request obtained from a manager's terminal, information corresponding to the request to the manager's terminal, through the communication interface 230, by using data or information stored in the storage.

The communication interface 230 may perform wired/wireless communication with other devices or networks. The communication interface 230 may be connected to a device located outside the server 200 to transceive signals or data. The server 200 may communicate with the sensing device 100 through the communication interface 230, or may be connected to another server connected via a network.

The storage may store various pieces of software and information needed for the server 200 to control a device or provide a certain service. For example, the storage may store programs executed in the server 200, applications, and various pieces of data or information used for a certain service.

The server 200 may include a load distribution server and function servers providing certain services. The server 200 may include a plurality of servers divided by functions, or one integrated server.

According to the above configuration, the server 200 may obtain the point clouds over time with respect to a three-dimensional space from the sensing device 100 through the communication interface 230, or receive a result of the detection of the installation abnormality of the sensing device 100. When the server 200 is connected to the sensing devices 100 and a result of the detection of installation abnormality is received from any one of the sensing devices 100, the server 200 may block or erase the receiving of information or data received from the sensing device 100 where installation abnormality is detected.

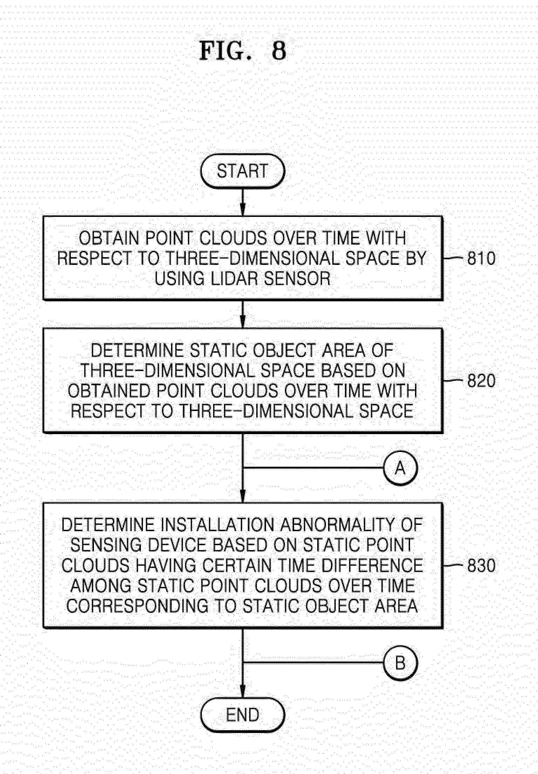

FIG. 8 is a flowchart for explaining a method of sensing installation abnormality of the sensing device 100, according to an embodiment. Detailed descriptions of the sensing device 100 that are redundant with the descriptions presented above are omitted below.

In operation 810, the sensing device 100 may obtain point clouds over time with respect to a three-dimensional space by using a LiDAR sensor. The sensing device 100 may continuously obtain the point cloud of a three-dimensional space.

In operation 820, the sensing device 100 may determine a static object area of a three-dimensional space based on the obtained point clouds over time with respect to a three-dimensional space. The sensing device 100 may generate a space information map from the obtained point clouds over time with respect to a three-dimensional space. The space information map may be a normalized map indicating space information, such as a voxel map, a depth map, and the like. The sensing device 100 may determine a static object area based on a period during which are continuously detected point clouds in unit areas at corresponding positions between frames of the generated space information map. The sensing device 100 may determine a static object area based on a period during which the point clouds in unit areas at corresponding positions between frames of a space information map are continuously detected with the number of points greater than or equal to a minimum detection threshold value.

For example, when the space information map is a voxel map, the sensing device 100 may distinguish, in each frame of the voxel map, a static voxel in which a period during which point clouds in voxels are continuously detected is greater than or equal to a threshold value from a dynamic voxel in which a period during which point clouds in voxels are continuously detected is less than the threshold value, and may determine a static object area formed of static voxels in a reference frame of a specific time point of a voxel map.

The sensing device 100 may determine a static object area of a three-dimensional space based on a point cloud of an assigned area among the obtained point clouds over time with respect to a three-dimensional space. When a reference area in which a dynamic point cloud hardly occurs is assigned, instead of using the obtained full point clouds over time with respect to a three-dimensional space, the sensing device 100 may determine a static object area of a three-dimensional space based on a point cloud of the assigned area. The reference area may be assigned by a user, or automatically assigned as an area that is determined by the sensing device 100 by using a trained model to be an area of a static point cloud corresponding to a static object corresponding to appropriate height and size.

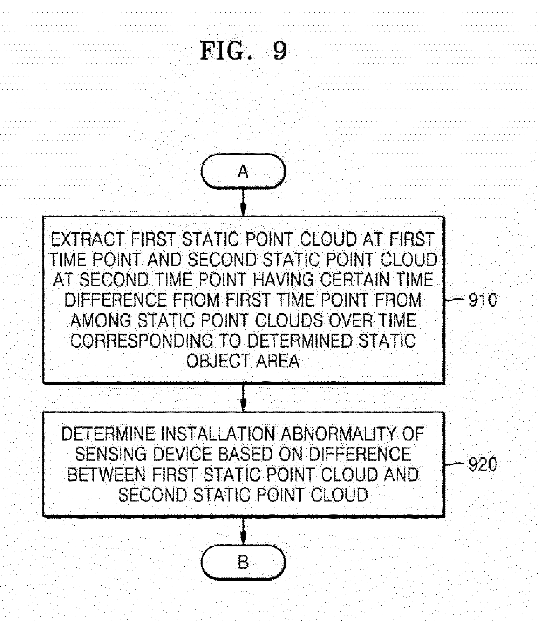

In operation 830, the sensing device 100 may determine the installation abnormality of the sensing device 100 based on static point clouds having a certain time difference among the static point clouds over time corresponding to the determined static object area. Operation 830 will be described below in detail with reference to FIG. 9.

FIG. 9 is a detailed flowchart for explaining a process of determining the installation abnormality of the sensing device 100. Operation 830 of FIG. 8 described above is described in detail.

In operation 910, the sensing device 100 may extract a first static point cloud at a first time point and a second static point cloud at a second time point having a certain time difference from the first time point, from among the static point clouds over time corresponding to the determined static object area.

In operation 920, the sensing device 100 may determine the installation abnormality of the sensing device 100 based on a difference between the first static point cloud and the second static point cloud.

For example, the sensing device 100 may determine the installation abnormality of the sensing device 100 by comparing a ratio of an area of the first static point cloud to the determined static object area with a ratio of an area of the second static point cloud to the determined static object area.

In another example, when a voxel map is generated from the point clouds over time with respect to the three-dimensional space obtained by the sensing device 100, in the voxel map, the sensing device 100 may determine the installation abnormality of the sensing device 100 by comparing a ratio of the number of voxels forming a first static point cloud to the number of all voxels forming the determined static object area with a ratio of the number of voxels forming a second static point cloud to the number of all voxels forming the determined static object area.

For convenience of explanation, although the sensing device 100 is described on an assumption of being installed on a fixed structure, the sensing device 100 may be installed not only on a fixed structure, but also on a moving structure. For example, when the sensing device 100 is installed on a vehicle or a drone, as a three-dimensional space is changed according to the movement of the vehicle or drone, the position of a static object in the three-dimensional space may be changed in the space information map. However, when the vehicle or drone repeatedly passes through the same space, point clouds of the same space may be obtained based on the position information of the vehicle or drone. In another example, when a structure on which the sensing device 100 is installed periodically rotates by a certain angle in order to monitor a relatively large space, the sensing device 100 may obtain a point cloud of a three-dimensional space obtained at the same angle as a point cloud for the same space.

Each of the embodiments described above may be provide in the form of a computer program or an application stored in a medium, to perform certain operations to perform a method of sensing the installation abnormality of the sensing device 100. In other words, each of the embodiments described above may be provide in the form of a computer program or an application stored in a medium, to perform, by at least one processor of the sensing device 100, certain operations of a method of detecting installation abnormality.

The above-described embodiments may be implemented in the form of a computer-readable storage medium that stores instructions and data executable by a computer or processor. At least one of the instructions and data may be stored in the form of program code, and when executed by a processor, may generate a certain program module and perform a certain operation. The computer-readable storage medium may include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks (SSDs), and any devices capable of providing instructions or software, associated data, data files, and data structures to a processor or computer so as to execute the instructions.

While this disclosure has been particularly shown and described with reference to preferred embodiments thereof, it will be understood by those of ordinary skill in the art that various changes in form and details may be made therein without departing from the spirit and scope of the disclosure as defined by the appended claims. The preferred embodiments should be considered in descriptive sense only and not for purposes of limitation. Therefore, the scope of the disclosure is defined not by the detailed description of the disclosure but by the appended claims, and all differences within the scope will be construed as being included in the disclosure.

## Claims

1. A method of sensing an installation abnormality of a sensing device, the method comprising:
obtaining point clouds over time with respect to a three-dimensional space by using a LiDAR sensor;
determining a static object area of the three-dimensional space based on the obtained point clouds over time with respect to the three-dimensional space; and
determining the installation abnormality of a sensing device based on static point clouds having a certain time difference among static point clouds over time corresponding to the determined static object area.

2. The method of claim 1, wherein the determining of the static object area of the three-dimensional space comprises determining the static object area based on a period during which point clouds in unit areas at corresponding positions between frames of a space information map generated from the obtained point clouds over time with respect to the three-dimensional space are continuously detected.

3. The method of claim 2, wherein the determining of the static object area of the three-dimensional space comprises determining the static object area based on a period during which the point clouds in unit areas at corresponding positions between frames of a space information map are continuously detected with a number of points greater than or equal to a minimum detection threshold value.

4. The method of claim 2, wherein the determining of the static object area of the three-dimensional space comprises, based on the space information map being a voxel map, in each frame of the voxel map, distinguishing a static voxel in which a period during which point clouds in voxels are continuously detected is greater than or equal to a threshold value from a dynamic voxel in which a period during which point clouds in voxels are continuously detected is less than the threshold value, and determining the static object area formed of the static voxels in a reference frame of a specific time point of the voxel map.

5. The method of claim 1, wherein the determining of the static object area of the three-dimensional space comprises determining the static object area of the three-dimensional space based on a point cloud of an assigned area among the obtained point clouds over time with respect to the three-dimensional space.

6. The method of claim 1, wherein the determining of the installation abnormality of the sensing device comprises:
extracting a first static point cloud at a first time point and a second static point cloud at a second time point having a certain time difference from the first time point, among the static point clouds over time corresponding to the determined static object area; and
determining the installation abnormality of the sensing device based on the difference between the first static point cloud and the second static point cloud.

7. The method of claim 6, wherein the determining of the installation abnormality of the sensing device comprises determining the installation abnormality of the sensing device by comparing a ratio of an area of the first static point cloud to the determined static object area with a ratio of an area of the second static point cloud to the determined static object area.

8. The method of claim 6, wherein the determining of the installation abnormality of the sensing device comprises, in a voxel map generated from the obtained point clouds over time with respect to a three-dimensional space, determining the installation abnormality of the sensing device by comparing a ratio of a number of voxels forming the first static point cloud to a number of all voxels forming the determined static object area with a ratio of a number of voxels forming the second static point cloud to a number of all voxels forming the determined static object area.

9. A computer-readable storage medium having recorded thereon a program to be executed on a computer, the computer-readable storage medium comprising:
instructions to obtain point clouds over time with respect to a three-dimensional space by using a LiDAR sensor;
instructions to determine a static object area of the three-dimensional space, based on instructions based on the obtained point clouds over time with respect to the three-dimensional space; and
instructions to determine an installation abnormality of a sensing device based on static point clouds having a certain time difference among static point clouds over time corresponding to the determined static object area.

10. A sensing device comprising:
a sensor unit configured to obtain point clouds over time with respect to a three-dimensional space by using a LiDAR sensor;
a memory storing one or more instructions; and
a processor configured to, by executing the one or more instructions, determine static object area of the three-dimensional space based on the obtained point clouds over time with respect to the three-dimensional space, and determine an installation abnormality of the sensing device based on static point clouds having a certain time difference among static point clouds over time corresponding to the determined static object area.

11. The sensing device of claim 10, wherein the processor is further configured to, by executing the one or more instructions, determine the static object area based on a period during which point clouds in unit areas at corresponding positions between frames of a space information map generated from the obtained point clouds over time with respect to the three-dimensional space are continuously detected.

12. The sensing device of claim 11, wherein the processor is further configured to, by executing the one or more instructions, distinguish, in each frame of the voxel map, a static voxel in which a period during which point clouds in voxels are continuously detected is greater than or equal to a threshold value from a dynamic voxel in which a period during which point clouds in voxels are continuously detected is less than the threshold value, and determine the static object area formed of the static voxels in a reference frame of a specific time point of the voxel map.

13. The sensing device of claim 11, wherein the processor is further configured to, by executing the one or more instructions, based on the space information map being a voxel map, distinguish, in each frame of the voxel map, a static voxel in which a period during which point clouds in voxels are continuously detected is greater than or equal to a threshold value from a dynamic voxel in which a period during which point clouds in voxels are continuously detected is less than the threshold value, and determine the static object area formed of the static voxel in a reference frame of a specific time point of the voxel map.

14. The sensing device of claim 10, wherein the processor is further configured to, by executing the one or more instructions, determine the static object area of the three-dimensional space based on a point cloud of an assigned area among the obtained point clouds over time with respect to the three-dimensional space.

15. The sensing device of claim 10, wherein the processor is further configured to, by executing the one or more instructions, extract a first static point cloud at a first time point and a second static point cloud at a second time point having a certain time difference from the first time point, among the static point clouds over time corresponding to the determined static object area, and determine the installation abnormality of the sensing device based on the difference between the first static point cloud and the second static point cloud.

16. The sensing device of claim 15, wherein the processor is further configured to, by executing the one or more instructions, determine the installation abnormality of the sensing device by comparing a ratio of an area of the first static point cloud to the determined static object area with a ratio of an area of the second static point cloud to the determined static object area.

17. The sensing device of claim 15, wherein the processor is further configured to, by executing the one or more instructions, determine the installation abnormality of the sensing device by comparing a ratio of a number of voxels forming the first static point cloud to a number of all voxels forming the determined static object area with a ratio of a number of voxels forming the second static point cloud to a number of all voxels forming the determined static object area, in a voxel map generated from the obtained point clouds over time with respect to the three-dimensional space.
